Europäisches Patentamt

European Patent Office

Office européen des brevets

(19)

(11) Veröffentlichungsnummer: **0 353 456**

**A1**

(12) **EUROPÄISCHE PATENTANMELDUNG**

(21) Anmeldenummer: 89111635.2

(22) Anmeldetag: 27.06.89

(51) Int. Cl.4: **G01B 11/04 , G01B 11/24 , G01B 11/02**

(30) Priorität: 26.07.88 DE 3825295

(43) Veröffentlichungstag der Anmeldung:
07.02.90 Patentblatt 90/06

(84) Benannte Vertragsstaaten:
BE CH DE FR GB IT LI NL SE

(71) Anmelder: **Heidelberger Druckmaschinen Aktiengesellschaft**
**Kurfürsten-Anlage 52-60 Postfach 10 29 40**
**D-6900 Heidelberg 1(DE)**

(72) Erfinder: **Blaser, Peter Theobald**
**Neuwiesenweg 3**
**D-6912 Dielheim(DE)**

(74) Vertreter: **Stoltenberg, Baldo Heinz-Herbert et al**
**c/o Heidelberger Druckmaschinen AG**
**Kurfürsten-Anlage 52-60**
**D-6900 Heidelberg 1(DE)**

(54) **Vorrichtung zur Erfassung der Position einer Kante.**

(57) Bei einer Vorrichtung zur Erfassung der Position einer Kante (4), insbesondere einer Papierkante bei einer Druckmaschine, bildet eine Zeile (1) von lichtemittierenden Elementen einen Winkel mit der Kante. Zum Empfang des von den lichtemittierenden Elementen emittierten Lichts ist ein opto-elektrischer Wandler (6) vorgesehen. Die Kante ist zwischen der Zeile (1) und dem opto-elektrischen Wandler (6) führbar, und die lichtemittierenden Elemente werden nacheinander pulsierend angesteuert. Synchron dazu wird die Ausgangsspannung des opto-elektrischen Wandlers abgefragt.

EP 0 353 456 A1

Fig. 1a

Fig. 1b

**Heidelberger Druckmaschinen Aktiengesellschaft**

Vorrichtung zur Erfassung der Position einer Kante

Die Erfindung betrifft eine Vorrichtung zur Erfassung der Position einer Kante, insbesondere einer Papierkante bei einer Druckmaschine.

Um eine bestimmte Passergenauigkeit bei mehrfarbigen Bogendruckmaschinen zu erreichen, ist es notwendig, den Papierbogen entsprechend genau zu positionieren. Dazu ist eine Erfassung der Position des Papiers erforderlich.

Zur Erfassung der Position einer Papierkante bei einer Druckmaschine sind verschiedene Vorrichtungen bekannt geworden, die mit Durchlicht- oder Reflexlichtschranken arbeiten, die jedoch nur eine bestimmte Position erfassen können, also feststellen können, ob die Papierkante diesseits oder jenseits einer vorgegebenen Position befindet. Andere bekannte Vorrichtungen arbeiten mit einer Zeile aus opto-elektrischen Wandlern, insbesondere sogenannte CCD-Sensorzeilen. Diese Vorrichtungen sind jedoch relativ teuer - nicht zuletzt wegen des hohen Preises der CCD-Sensoren -, können jedoch die Position als numerischen Wert ermitteln.

Bei einer anderen bekannten Vorrichtung (DE-OS 20 46 602) ist ein Meßkopf derart ausgebildet, daß zum Abtasten der Seitenlage eines Bogens beispielsweise eine Fotozelle mit keilförmigem Lichteinfall dient, so daß jeder Seitenlage ein bestimmter Fotostrom entspricht. Eine derartige analoge Abtastung ist jedoch problematisch bei verschiedenen Papierarten und Papaierfarben.

Aufgabe der vorliegenden Erfindung ist es, eine preisgünstige Vorrichtung zur Erfassung der Position einer Kante, insbesondere einer Papierkante bei einer Druckmaschine vorzuschlagen, die ferner genügend genau ist und ausreichend schnell wechselnde Positionen der Kante erfaßt.

Die erfindungsgemäße Vorrichtung ist dadurch gekennzeichnet, daß eine Zeile von lichtemittierenden Elementen einen Winkel mit der Kante bildet, daß zum Empfang des von den lichtemittierenden Elementen emittierten Lichts ein opto-elektrischer Wandler vorgesehen ist, daß die Kante zwischen der Zeile und dem opto-elektrischer Wandler führbar ist und daß die lichtemittierenden Elemente nacheinander pulsierend angesteuert werden und synchron dazu die Ausgangsspannung des opto-elektrischen Wandlers abgefragt wird. Vorzugsweise werden als lichtemittierende Elemente lichtemittierende Dioden (LED) verwendet.

Die Zeile kann senkrecht zur Kante angeordnet sein. Es können jedoch auch andere Winkel zwischen der Kante und der Zeile gewählt werden. Bei einem kleineren Winkel erhöht sich bei gegebenem Abstand zwischen den lichtemittierenden Elementen die Meßauflösung.

Neben dem geringen Aufwand ist ein weiterer Vorteil der erfindungsgemäßen Vorrichtung, daß Änderungen bzw. Ungleichförmigkeiten der Transparenz des Papiers oder des jeweiligen anderen Materials nicht zu einer Verfälschung des Meßergebnisses beitragen, solange der Signalunterschied zwischen der direkten Beleuchtung des opto-elektrischen Wandlers und der Beleuchtung durch das Papier mit Hilfe einer Schwellwertschaltung detektierbar ist. Schließlich besteht ein Vorteil darin, daß die Leistungsaufnahme der erfindungsgemäßen Vorrichtung gering ist, da jeweils zu einer Zeit nur eine LED aufleuchtet.

Für die erfindungsgemäße Vorrichtung geeignete LED-Zeilen werden bereits hergestellt. So wird beispielsweise von der Firma Telefunken unter der Typenbezeichnung TPAC 6080 eine LED-Zeile angeboten, die 16 LEDs pro Millimeter aufweist, was einem Rastermaß von 62,5 um entspricht. Diese LED-Zeile ist an sich für die Verwendung als Belichtungselement in Kopiergeräten und Laserdruckern vorgesehen.

Eine Weiterbildung der Erfindung besteht darin, daß zur Bündelung des von den lichtemittierenden Elementen ausgehenden Lichts ein Glasfaserquerschnittswandler vorgesehen ist. Es ist jedoch im Rahmen der Erfindung auch eine Bündelung durch Linsen oder Spiegel möglich.

Durch die in den Unteransprüchen aufgeführten Maßnahmen sind vorteilhafte Weiterbildungen und Verbesserungen der im Hauptanspruch angegebenen Erfindung möglich. Insbesondere beinhalten Weiterbildungen vorteilhafte Schaltungsmaßnahmen.

Ferner besteht eine Weiterbildung der Erfindung darin, daß außer einem ersten Betriebszustand, bei welchem nacheinander die jeweils benachbarten lichtemittierenden Elemente angesteuert werden, ein zweiter Betriebszustand vorgesehen ist, bei welchem bei der Ansteuerung lichtemittierende Elemente übersprungen werden.

Durch diese Weiterbildung kann zunächst durch Ansteuerung von beispielsweise jeder zehnten Diode die ungefähre Position der Kante bestimmt werden, worauf auf die Taktung einer jeden LED umgeschaltet wird, um die genaue Position der Kante zu bestimmen.

Eine weitere Möglichkeit, Zeit zu sparen bzw. die Ermittlung der Position zu beschleunigen, ist dadurch gegeben, daß gemäß einer anderen Weiterbildung der Erfindung jeweils nur derjenige Bereich von lichtemittierenden Elementen angesteuert wird, in welchem sich die Kante aufgrund von vorangegangenen Erfassungen unter Berücksichtigung der Eigenschaften der Druckmaschine befinden kann.

Der von der erfindungsgemäßen Vorrichtung ermittelte Wert für die Position der Papierkante kann je nach Erfordernissen im Einzelfall angezeigt und/oder zur Steuerung von Papierführungselementen im Sinne einer Lageregelung verwendet werden.

Ausführungsbeispiele der Erfindung sind in der Zeichnung anhand mehrerer Figuren dargestellt und in der nachfolgenden Beschreibung näher erläutert. Es zeigt:

Fig. 1a $\Big\}$ zwei Ansichten eines Ausführungsbeispiels und
Fig. 1b $\Big\}$

Fig. 2 ein Blockschaltbild einer Schaltungsanordnung zum Betrieb einer erfindungsgemäßen Vorrichtung.

Gleiche Teile sind in den Figuren mit gleichen Bezugzeichen versehen.

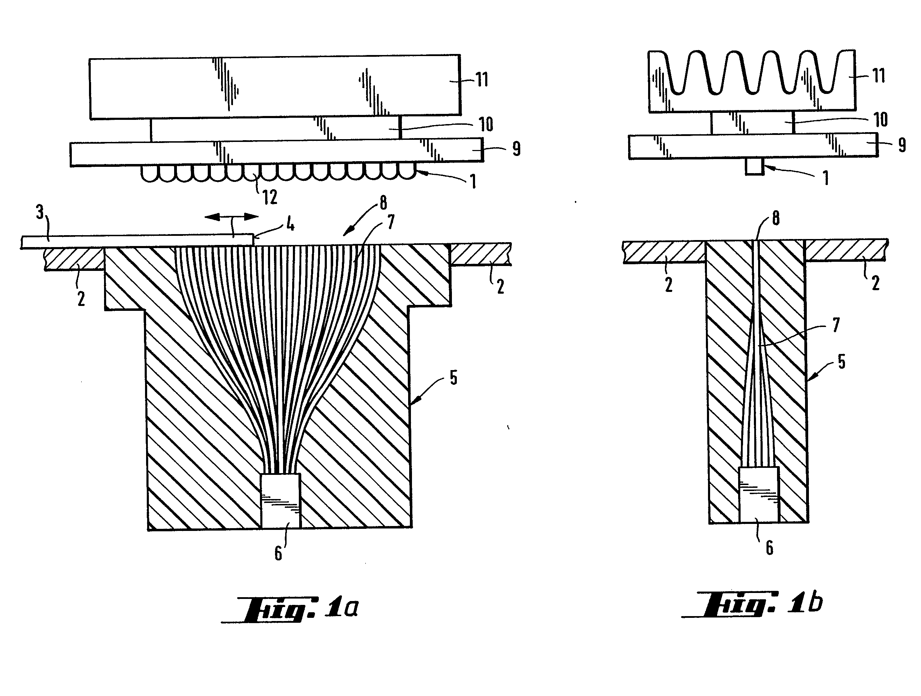

Bei der Vorrichtung nach Fig. 1 ist eine LED-Zeile 1 oberhalb eines Tisches 2 angeordnet, auf welchem ein Papierbogen 3 mit einer Kante 4 transportiert wird, wobei durch Ungenauigkeiten von nicht dargestellten Papierführungselementen die Kante 4 ungewollten Verschiebungen in Richtung des Doppelpfeils unterworfen ist. Um diese ausregeln oder mindestens anzeigen zu können, wird mit Hilfe der erfindungsgemäßen Vorrichtung die Position der Kante 4 ermittelt bzw. gemessen.

Der LED-Zeile 1 gegenübergestellt ist eine Empfangseinrichtung 5, die aus einem opto-elektrischen Wandler 6 und einem Glasfaserbündel 7 besteht. Letzteres dient als Querschnittswandler und führt das Licht, welches auf eine Linie 8 fällt, auf der lichtempfindlichen Oberfläche des opto-elektrischen Wandlers 6 zusammen. Dabei bilden beispielsweise die auf die lichtempfindliche Oberfläche gerichteten Enden der Glasfasern eine Kreisfläche.

Die LED-Zeile 1 ist auf einer Leiterplatte 9 montiert, auf welche auch weitere zur Ansteuerung der LED-Zeile 1 erforderliche Elektronikbausteine angeordnet sind. Von letzteren ist lediglich ein Baustein 10 und ein Kühlkörper 11 schematisch dargestellt.

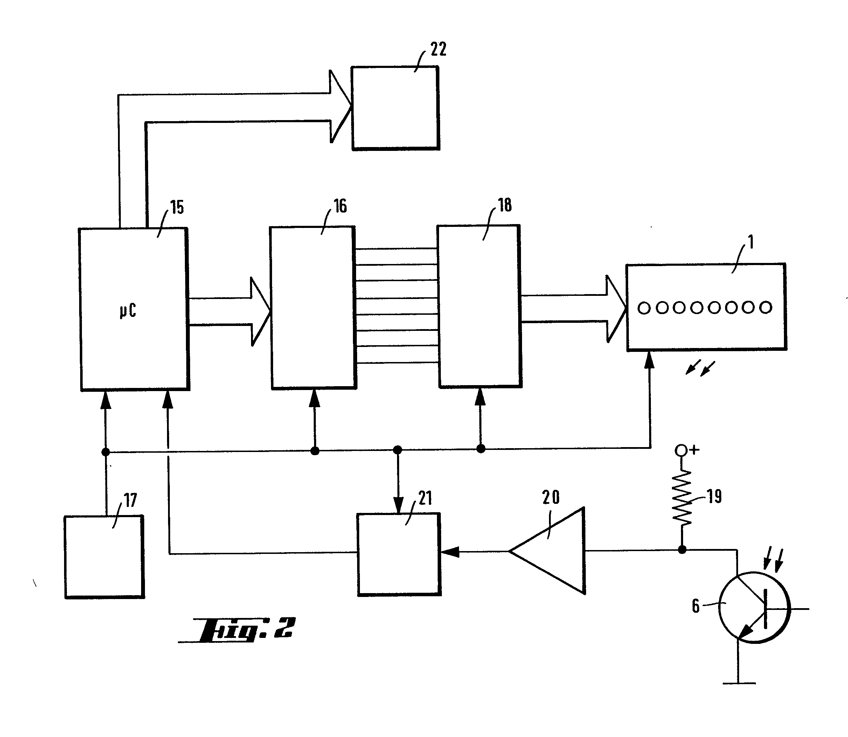

Mit Hilfe der in Fig. 2 dargestellten Schaltung werden nacheinander die einzelnen lichtemittierenden Dioden der LED-Zeile 1 angesteuert - beispielsweise von links nach rechts. Solange Dioden aufleuchten, die über dem Papier 3 liegen, gelangt kein bzw. nur wenig Licht zum opto-elektrischen Wandler 6. Erst bei der im Bereich der Kante 4 liegenden Diode (beispielsweise 12) gelangt mehr Licht zum opto-elektrischen Wandler 6, so daß dieser niederohmiger wird und die Eingangsspannung am Verstärker 20 sinkt. Da durch eine Steuerschaltung festgelegt ist, welche der Dioden in diesem Moment angesteuert wird, ist somit die Position der Kante ermittelt.

Bei dem in Fig. 2 dargestellten Ausführungsbeispiel für eine Schaltung ist zur Steuerung der Vorgänge im einzelnen ein Mikrocomputer 15 vorgesehen. Zur Erzeugung der Adresse der jeweils anzusteuernden Diode wird ein Zähler 16 benutzt, der von einem Taktgenerator 17 getaktet wird. Die Ausgangssignale des Zählers 16 werden als achtstellige Adresse über einen Code-Wandler 18 der LED-Zeile 4 zugeführt. Das vom Taktgeneraor 17 erzeugte Taktsignal wird ebenfalls dem Mikrocomputer 15, dem Code-Wandler 18 und der LED-Zeile 1 zugeführt.

Als opto-elektrischer Wandler ist bei der Schaltungsanordnung nach Fig. 2 ein Fototransistor 6 vorgesehen, der über einen Widerstand 19 Betriebsspannung erhält. Das vom einfallenden Licht abhängige Ausgangssignal wird in einem Verstärker 20 verstärkt und einer Schwellwertschaltung 21 zugeführt. Dadurch wird das Ausgangssignal des opto-elektrischen Wandlers in ein binäres Signal umgewandelt, was einem Eingang des Mikrocomputers 15 zugeleitet wird. Der Schwellwert der Schaltung 21 ist derart eingestellt, daß das dem Mikrocomputer 15 zugeführte binäre Signal einen ersten Zustand einnimmt, wenn sich zwischen der betreffenden jeweils leuchtenden Diode und dem opto-elektrischen Wandler 6 Papier befindet, und daß der zweite binäre Zustand eingenommen wird, wenn sich kein Papier zwischen der jeweils leuchtenden Diode und dem opto-elektrischen Wandler 6 befindet.

Der Mikrocomputer 15 weist zwei parallele Ausgänge auf, von denen einer mit einem Ladeeingang des Zählers 16 verbunden ist und der andere Ausgang 22 zur Ausgabe des Meßergebnisses dient.

Werden vom Zähler 16 nacheinander alle möglichen Adressen ausgegeben, so werden alle Dioden nacheinander angesteuert. Bei derjenigen Diode, welche sich im Randbereich des Papiers befindet, wird der Fototransistor leitend. Dieses wird dem Mikrocomputer 15, wie bereits beschrieben, mitgeteilt, der über den Ausgang 22 die Adresse dieser Diode als Maß für die Position der Papierkante ausgibt. Selbstverständlich kann diese Ausgabe in eine geeignete andere Form umgerechnet werden, beispielsweise durch Multiplikation mit dem Rastermaß in eine Maßzahl von Längeneinheiten.

Soll - beispielsweise bei hohen Druckgeschwindigkeiten -möglichst schnell die Position der Papierkante festgestellt werden, so kann durch entsprechende Steuerung des Zählers 16 eine grobe Abtastung der Kante vorgenommen werden. Dieses kann beispielsweise derart erfolgen, daß nur jeweils jede zehnte Diode angesteuert wird. Bei gleicher Taktfrequenz ergibt sich somit eine wesentlich kürzere Zeit, in welcher die ungefähre Position der Papierkante ermittelt wird. Ist die ungefähre Position bekannt, kann derjenige Teilbereich der LED-Zeile, in welchem sich die Papierkante befindet, in kleinen Schritten - das heißt von Diode zu Diode -abgetastet werden. Hierzu kann der Zähler 16 vom Mikrocomputer 15 auf die Anfangsadresse dieses Bereichs gesetzt werden.

**Ansprüche**

1. Vorrichtung zur Erfassung der Position einer Kante, insbesondere einer Papierkante bei einer Druckmaschine, dadurch gekennzeichnet, daß eine Zeile (1) von lichtemittierenden Elementen einen Winkel mit der Kante (4) bildet, daß zum Empfang des von den lichtemittierenden Elementen emittierten Lichts ein opto-elektrischer Wandler (6) vorgesehen ist, daß die Kante (4) zwischen der Zeile (1) und dem opto-elektrischen Wandler (6) führbar ist und daß die lichtemittierenden Elemente nacheinander pulsierend angesteuert werden und synchron dazu die Ausgangsspannung des opto-elektrischen Wandlers (6) abgefragt wird.

2. Vorrichtung nach Anspruch 1, dadurch gekennzeichnet, daß die lichtemittierenden Elemente lichtemittierende Dioden (LED) sind.

3. Vorrichtung nach Anspruch 1, dadurch gekennzeichnet, daß zur Bündelung des von den lichtemittierenden Elementen ausgehenden Lichts ein Glasfaserquerschnittswandler (7) vorgesehen ist.

4. Vorrichtung nach einem der vorhergehenden Ansprüche, dadurch gekennzeichnet, daß eine Steuerschaltung (15, 16, 18) vorgesehen ist, welche die lichtemittierenden Elemente (1) im Takt eines zugeführten Taktsignals nacheinander mit Spannung versorgt, und daß ein Ausgang des opto-elektrischen Wandlers (6) über eine Schwellwertschaltung (21) mit einer Logikschaltung (15) verbunden ist, welche das bei einem Amplitudensprung der Ausgangsspannung des opto-elektrischen Wandlers (6) vorliegende Ausgangssignal der Steuerschaltung als die Position der Papierkante kennzeichnendes Signal weiterleitet.

5. Vorrichtung nach Anspruch 4, dadurch gekennzeichnet, daß die Steuerschaltung und die Logikschaltung mindestens teilweise von einem Mikrocomputer (15) gebildet werden.

6. Vorrichtung nach Anspruch 5, dadurch gekennzeichnet, daß ein Zähler (16) als Adressengenerator für die jeweils anzusteuernden lichtemittierenden Elemente vorgesehen ist, daß Ausgänge des Zählers über einen Code-Wandler (18) mit den lichtemittierenden Elementen (1) verbunden sind, daß der Zähler (16) von einem Mikrocomputer (15) setzbar ist und daß der Mikrocomputer (15), der Zähler (16), der Code-Wandler (18) und die lichtemittierenden Elemente (1) von einem Taktgenerator (17) ansteuerbar sind.

7. Vorrichtung nach Anspruch 6, dadurch gekennzeichnet, daß der Ausgang des opto-elektrischen Wandlers (6) über einen Verstärker (20) und eine Schwellwertschaltung (21) mit einem Eingang des Mikrocomputers (15) verbunden ist.

8. Vorrichtung nach einem der vorhergehenden Ansprüche, dadurch gekennzeichnet, daß außer einem ersten Betriebszustand, bei welchem nacheinander die jeweils benachbarten lichtemittierenden Elemente angesteuert werden, ein zweiter Betriebszustand vorgesehen ist, bei welchem bei der Ansteuerung lichtemittierende Elemente übersprungen werden.

9. Vorrichtung nach einem der vorhergehenden Ansprüche, dadurch gekennzeichnet, daß jeweils nur derjenige Bereich von lichtemittierenden Elementen angesteuert wird, in welchem sich die Papierkante aufgrund von vorangegangenen Erfassungen unter Berücksichtigung der Eigenschaften der Druckmaschine befinden kann.

**Fig. 1a**

**Fig. 1b**

EP 0 353 456 A1

Fig. 2

EP 0 353 456 A1

Europäisches
Patentamt

**EUROPÄISCHER RECHERCHENBERICHT**

Nummer der Anmeldung

EP 89 11 1635

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | DE-A-2 615 143 (SIEMENS AG)<br>* Seite 4; Figuren 1,2; Anspruch 1 *<br>--- | 1,2 | G 01 B 11/04<br>G 01 B 11/24<br>G 01 B 11/02 |
| Y | PATENT ABSTRACTS OF JAPAN<br>Band 6, Nr. 245 (P-159)(1123), 3.<br>Dezember 1982; & JP - A - 57 142503<br>(TOKYO SHIBAURA DENKI K.K.) 03.09.1982<br>* ganzes Dokument *<br>--- | 1,2 | |
| A | FR-A-1 369 597 (D.B. FOSTER)<br>* Seite 3, linke Spalte, zweiter Absatz<br>– Seite 3, rechte Spalte, letzter<br>Absatz; Figuren 1-3 *<br>--- | 3 | |
| A | DE-A-3 117 004 (LAUREL BANK MACHINE<br>CO. LTD.)<br>* Seite 9, erster Absatz; Figuren 1-3;<br>Ansprüche 1-3 *<br>--- | 4 | |
| A | US-A-4 192 613 (M. HAMMAR)<br>* Spalten 2-4; Figuren 1-3 *<br>----- | 1,2 | **RECHERCHIERTE SACHGEBIETE (Int. Cl.5)**<br><br>G 01 B 11/00 |

Der vorliegende Recherchenbericht wurde für alle Patentansprüche erstellt

| Recherchenort | Abschlußdatum der Recherche | Prüfer |
|---|---|---|
| BERLIN | 10-10-1989 | VORROPOULOS G |